# EUROPEAN PATENT SPECIFICATION

(11) **EP 2 765 512 B1**
(45) Date of publication and mention of the grant of the patent: **15.02.2017**
(21) Application number: 12874591.6
(22) Date of filing: 27.06.2012
(51) Int. Cl.: G06F 9/455, G06F 9/54

(54) **METHOD AND DEVICE FOR IMPLEMENTING COMMUNICATIONS BETWEEN VIRTUAL MACHINES BASED ON SCHEDULING LAYER**
VERFAHREN UND VORRICHTUNG ZUR DURCHFÜHRUNG DER KOMMUNIKATION ZWISCHEN VIRTUELLEN MASCHINEN AUF DER BASIS EINER PLANUNGSSCHICHT
PROCÉDÉ ET DISPOSITIF PERMETTANT DE METTRE EN OEUVRE DES COMMUNICATIONS ENTRE DES MACHINES VIRTUELLES D'APRÈS UNE COUCHE DE PLANIFICATION

(30) Priority: 16.04.2012 CN 201210109101
(43) Date of publication of application: 13.08.2014
(73) Proprietor: ZTE Corporation, Shenzhen, Guangdong 518057 (CN)
(72) Inventor: LIANG, Lingling, Shenzhen Guangdong 518057 (CN)
(74) Representative: Gevers Patents
(86) International application number: PCT/CN2012/077623
(87) International publication number: WO 2013/155792

(56) References cited:
- EP-A2- 2 177 989
- WO-A1-2008/118797
- CN-A- 101 383 781
- CN-A- 101 859 263
- CN-A- 102 307 246
- US-A1- 2008 086 726
- Jian Wang: "Survey of State-of-the-art in Inter-VM Communication Mechanisms", Research Proficiency Report, 2009, 27 September 2009 (2009-09-27), pages 1-25, XP055090654, cs.binghamton.edu Retrieved from the Internet: URL:http://www.cs.binghamton.edu/~jianwang /papers/proficiency.pdf [retrieved on 2013-11-28]

## Description

### TECHNICAL FIELD

The present disclosure relates to the field of communication technology, and in particular to a method and a device for implementing communications between virtual machines based on a scheduling layer.

### BACKGROUND

A virtualized operating system can run multiple operating systems simultaneously on a single CPU. For a mobile phone and other mobile terminals, real-time is a very important index, when multiple virtual machines run simultaneously, rapid communication between multiple virtual machines is very important. In the prior art, the method for implementing communications between virtual machines mainly includes: sharing memory between two virtual machines, and then reading, by a CPU, contents of the shared memory to implement communications between the two virtual machines. However, the method usually requires virtual machines to allocate a specified memory, and when there is a need for communications between the virtual machines, a CPU is required to read contents of the shared memory. Thus, it results in poor real time capability of communications between two virtual machines, and a waste of CPU resources. WO-A-2008/118797 discloses a communication between multiple computing systems in general, including between VMs within a virtual network. EP-A-2177989 discloses a global registry, maintained by a virtual machine manager, to store unique identifiers of VMs which are broadcasted in the network by message passing. None of the two documents discloses the specific binding operations of VMs to call back functions via a scheduling layer, as claimed. Jian Wang, Survey of State-of-the-art in Inter-VM Communication Mechanisms , XP55090654, 27-9-2009, discloses an implementation of fast throughput communication between VMs based on the XenSocket type socket family where a target VM binds a XenSocket and a source VM connects to it.

### SUMMARY

The present disclosure is mainly intended to provide a method and a device for implementing communications between virtual machines based on a scheduling layer. By using a scheduling layer, a source virtual machine in an upper layer can sent communication information to a target virtual machine directly through the scheduling layer, so as to achieve objectives such as improving communication speed between virtual machines and saving memory resources.

The present disclosure provides a method for implementing communications between virtual machines based on a scheduling layer in a mobile terminal as defined in independent claim 1 and the corresponding device defined in independent claim 6.

Preferably, before the first communication request sent by a source virtual machine is received, and the first mark ID for indicating that the first communication request is bound successfully, is returned to the source virtual machine, the method may further include:
states of the source virtual machine and the target virtual machine together with a communication information table for storing the communication information are initialized, and a source virtual machine ID number and a target virtual machine ID number are assigned to the source virtual machine and the target virtual machine, respectively.

Preferably, the target virtual machine using information provided by the source virtual machine, may include:
the target virtual machine using the source virtual machine ID number and the first mark ID provided by the source virtual machine.

Preferably, before the first mark ID for indicating that the first communication request is bound successfully, is returned to the source virtual machine, the method may further include:
the first communication request is stored in the communication information table.

Preferably, after the communication information sent by the source virtual machine is forwarded to the target virtual machine, and the CPU of the mobile terminal is assigned to the target virtual machine to process the communication information when the source virtual machine sends communication information to the target virtual machine, the method may further include:
a cancelling communication request sent by the source virtual machine is received, and the communication information in the communication information table is deleted.

Preferably, the device for implementing communications between virtual machines based on a scheduling layer may further include:
an initialization module, configured to initialize states of the source virtual machine and the target virtual machine together with a communication information table for storing the communication information, and assign a source virtual machine ID number and a target virtual machine ID number to the source virtual machine and the target virtual machine, respectively.

Preferably, the target virtual machine using information provided by the source virtual machine, may include: the source virtual machine ID number and the first mark ID.

Preferably, the device for implementing communications between virtual machines based on a scheduling layer may further include:
a storage module, configured to store the first communication request in the communication information table.

Preferably, the device for implementing communications between virtual machines based on a scheduling layer may further include:
a deleting module, configured to receive a cancelling communication request sent by the source virtual machine, and delete the communication information in the communication information table.

In the method for implementing communications between virtual machines based on a scheduling layer according to the present disclosure, firstly, the first communication request and the second communication request sent respectively by the source virtual machine and the target virtual machine are received, and the first mark ID and the second mark ID for indicating successful bindings are returned, so that the source virtual machine and the target virtual machine are bound to their respectively received mark IDs. Then, the communication information sent by the source virtual machine is forwarded to the target virtual machine, and the CPU is authorized to the target virtual machine to process the communication information. By means of the method to implement communications between the source virtual machine and the target virtual machine, the source virtual machine in an upper layer can sent directly communication information to the target virtual machine, thus improving communication speed between virtual machines and saving memory resources.

### BRIEF DESCRIPTION OF THE DRAWINGS

Fig. 1 shows a schematic flow chart of a method for implementing communications between virtual machines based on a scheduling layer according to an embodiment of the present disclosure;
Fig. 2 shows a schematic flow chart of a method for implementing communications between virtual machines based on a scheduling layer according to another embodiment of the present disclosure;
Fig. 3 shows a schematic flow chart of a method for implementing communications between virtual machines based on a scheduling layer according to yet another embodiment of the present disclosure;
Fig. 4 shows a schematic flow chart of a method for implementing communications between virtual machines based on a scheduling layer according to still another embodiment of the present disclosure;
Fig. 5 shows a schematic flow chart of a device for implementing communications between virtual machines based on a scheduling layer according to an embodiment of the present disclosure;
Fig. 6 shows a schematic flow chart of a device for implementing communications between virtual machines based on a scheduling layer according to another embodiment of the present disclosure;
Fig. 7 shows a schematic flow chart of a device for implementing communications between virtual machines based on a scheduling layer according to yet another embodiment of the present disclosure; and
Fig. 8 shows a schematic flow chart of a device for implementing communications between virtual machines based on a scheduling layer according to still another embodiment of the present disclosure.

### DETAILED DESCRIPTION

It should be noted that specific embodiments described herein are only used to explain the present disclosure but not intended to limit the present disclosure.

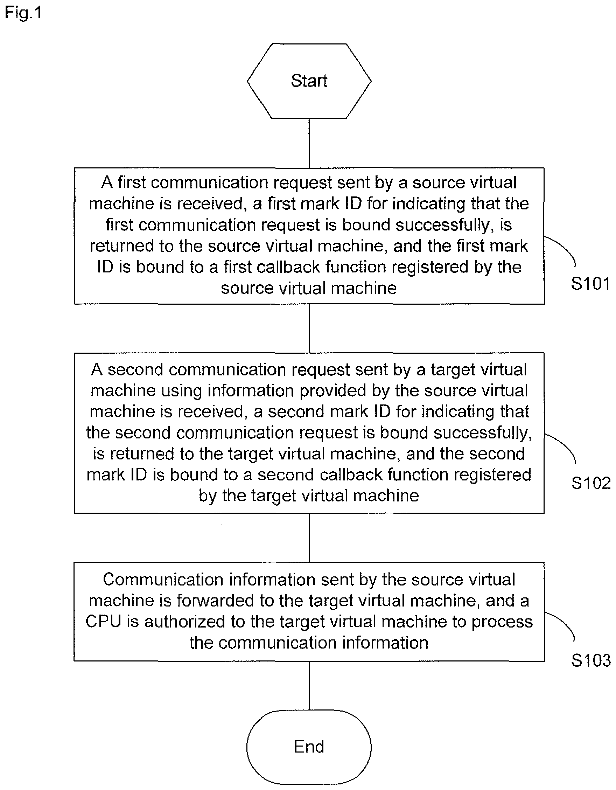

Referring to Fig. 1, provided is an embodiment of a method for implementing communications between virtual machines based on a scheduling layer according to the present disclosure, the method includes:
Step S101: A first communication request sent by a source virtual machine is received, a first mark ID for indicating that the first communication request is bound successfully, is returned to the source virtual machine, and the first mark ID is bound to a first callback function registered by the source virtual machine;

In the method for implementing communications between virtual machines based on a scheduling layer provided by the present disclosure, communication requests from the source virtual machine and one or more target virtual machines are received by the scheduling layer, and unique mark IDs are returned respectively, so that the source virtual machine and the target virtual machine are bound to their respectively received mark IDs. Then, the communication information sent by the source virtual machine is forwarded by the scheduling layer to the target virtual machine to be processed therein. Every time after receiving a communication request, the scheduling layer may process the request at once, and sent a scheduling instruction. In this way, the communication requests between the virtual machines can be responded and processed rapidly.

In the embodiment, if the source virtual machine needs to communicate with one or more target virtual machines on its opposite side, firstly, a first communication request needs to be sent to a scheduling layer, requesting to be bound to the scheduling layer. After receiving the first communication request, the scheduling layer may return, a unique first mark ID for indicating that the first communication request sent by the source virtual machine is bound successfully to the scheduling layer, to the source virtual machine according to the request and after the successful binding. After receiving the unique first mark ID, the source virtual machine may store the first mark ID, register a first callback function, and bind the first mark ID to the first callback function, so that when communicating with the target virtual machine, the source virtual machine can implement corresponding callback, so as to achieve the objective of communicating with the target virtual machine.

Step S102: A second communication request sent by a target virtual machine using information provided by the source virtual machine is received, a second mark ID for indicating that the second communication request is bound successfully, is returned to the target virtual machine, and the second mark ID is bound to a second callback function registered by the target virtual machine;

After receiving the first mark ID from the scheduling layer and registering the first callback function, the source virtual machine needs to sent a notice including binding information of the source virtual machine to the target virtual machine on its opposite side. Then, the target virtual machine may use information carried in the notice, and send a binding request defined as a second communication request to the scheduling layer, requesting to be bound to the scheduling layer. After receiving the second communication request, the scheduling layer may check whether performing the binding according to information carried in the second communication request, if the binding is performed successfully, the scheduling layer may return, a unique second mark ID for indicating that the second communication request is successfully bound to the scheduling layer, to the target virtual machine. After receiving the unique second mark ID, the target virtual machine may store the second mark ID, register a second callback function, and bind the second mark ID to the second callback function, so that when communicating with the source virtual machine, the target virtual machine can implement corresponding callback, so as to achieve the objective of communicating with the source virtual machine.

In the embodiment, after receiving the first mark ID from the scheduling layer, registering the first callback function, and implementing the binding of the first mark ID to the first callback function, the source virtual machine needs to notify the target virtual machine desired to communicate with to request to be bound to the scheduling layer. In this way, the source virtual machine may provide the target virtual machine with information including a source virtual machine ID number and the first mark ID by sharing memory, so that the target virtual machine sends the second communication request according to the information. In the embodiment, the source virtual machine ID number is a unique ID number for indicating respective virtual machine, which is assigned to a source virtual machine and a target virtual machine when the scheduling layer performs initialization.

Step S103: Communication information sent by the source virtual machine is forwarded to the target virtual machine, and a CPU is authorized to the target virtual machine to process the communication information.

After the source virtual machine and the target virtual machine both implement successfully the binding to the scheduling layer, i.e., implementing a test process of communication requests from the source virtual machine and the target virtual machine, then the source virtual machine and the target virtual machine can communication with each other. Firstly, the source virtual machine may send communication information to the target virtual machine, and the scheduling layer may check at any time whether there is communication information sent by the source virtual machine to the target virtual machine, if there is, the scheduling layer may forward the communication information to the target virtual machine. Meanwhile, the scheduling layer may authorize a CPU to the target virtual machine to process the communication information. After receiving the communication information forwarded by the scheduling layer, the target virtual machine may call the second callback function bound to the second mark ID, so as to enter a target function, and process the communication information according to the corresponding function.

In the method for implementing communications between virtual machines based on a scheduling layer according to the present disclosure, communications between the source virtual machine and target virtual machine are implemented by the scheduling layer. Firstly, the first communication request and the second communication request sent respectively by the source virtual machine and the target virtual machine are received, and the first mark ID and the second mark ID for indicating successful bindings are returned, so that the source virtual machine and the target virtual machine are bound to their respectively received mark IDs. Then, the communication information sent by the source virtual machine is forwarded to the target virtual machine, and the CPU is authorized to the target virtual machine to process the communication information. By means of the method to implement communications between the source virtual machine and the target virtual machine, the source virtual machine in an upper layer can sent communication information to the target virtual machine directly through the scheduling layer, thus communication speed between virtual machines can be improved to a great extent and memory resources can be saved.

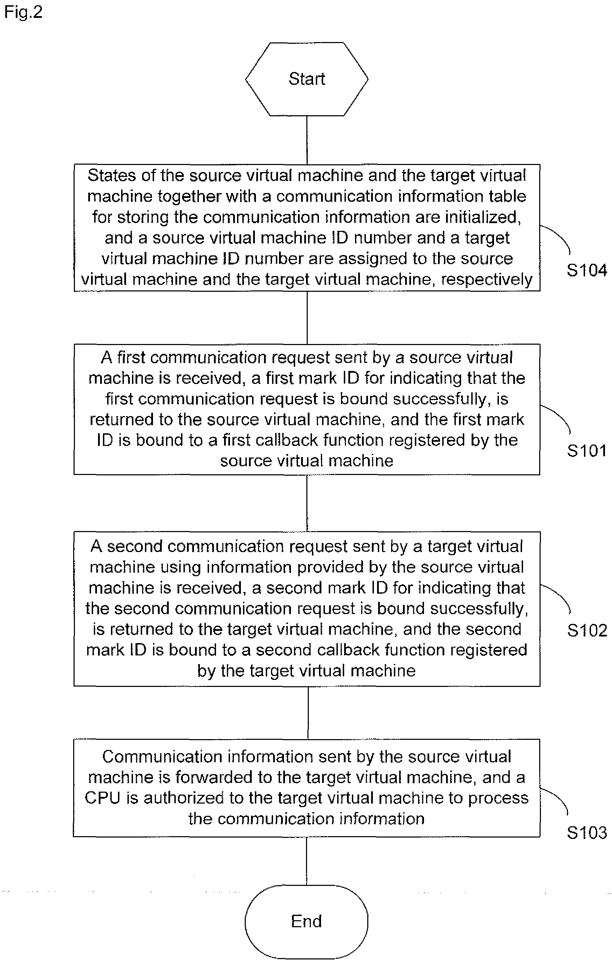

Referring to Fig. 2, provided is another embodiment of a method for implementing communications between virtual machines based on a scheduling layer according to the present disclosure. Before implementing step S101, the method further includes:
Step S104: States of the source virtual machine and the target virtual machine together with a communication information table for storing the communication information are initialized, and a source virtual machine ID number and a target virtual machine ID number are assigned to the source virtual machine and the target virtual machine, respectively.

In the embodiment, before communications between the source virtual machine and the target virtual machine are implemented by the scheduling layer, firstly, initialization needs to be performed by the scheduling layer, content of the initialization herein includes initializing states of the source virtual machine and the target virtual machine together with the communication information table, which is used to store the communication information after the scheduling layer receives communication requests from respective virtual machines. Whilst at the same time, ID numbers for indicating the source virtual machine and the target virtual machine need to be assigned respectively to the source virtual machine and the target virtual machine by the scheduling layer, and the two kinds of ID numbers may be defined respectively as a source virtual machine ID number and a target virtual machine ID number. Meanwhile, the source virtual machine and the target virtual machine need to be initialized in themselves, so as to register an interrupt function to facilitate establish communications with the scheduling layer.

Before communications between the source virtual machine and the target virtual machine are implemented, states of the source virtual machine and the target virtual machine together with the communication information table are initialized; whilst at the same time, the source virtual machine ID number and the target virtual machine ID number for indicating the source virtual machine and the target virtual machine are assigned respectively to the source virtual machine and the target virtual machine. Meanwhile, the source virtual machine and the target virtual machine need to be initialized in themselves. In this way, it is very convenient to receive communication requests from the source virtual machine and the target virtual machine by the scheduling layer, and to respond and process these communication requests rapidly. Accordingly, communication speed between virtual machines can be further ensured to a large extent.

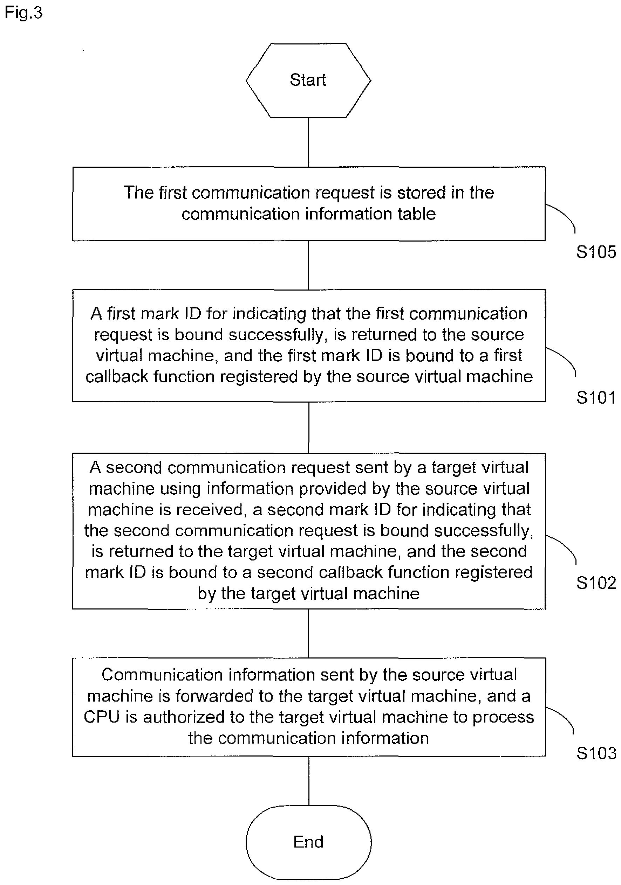

Referring to Fig. 3, provided is yet another embodiment of a method for implementing communications between virtual machines based on a scheduling layer according to the present disclosure. As shown in Fig. 3, the method may further include:
Step S105: The first communication request is stored in the communication information table.

In the embodiment, when the source virtual machine needs to communicate with one or more target virtual machines on its opposite side, firstly, a first communication request needs to be sent to the scheduling layer, requesting to be bound to the scheduling layer. After receiving the first communication request, the scheduling layer needs to store the first communication request, i.e., storing the first communication request in a communication information table in the scheduling layer, the communication information table provided herein is used to store the communication information after the scheduling layer receives the communication requests from respective virtual machines. After communications between the source virtual machine and the target virtual machine end, the scheduling layer may empty all the communication information stored in the communication information table, so as to store new communication information when communications between the source virtual machine and the target virtual machine are implemented next time.

The first communication request sent by the source virtual machine is stored in the communication information table of the scheduling layer, so as to store the communication information, which makes it convenient to check and test the communication information during communications between the source virtual machine and the target virtual machine.

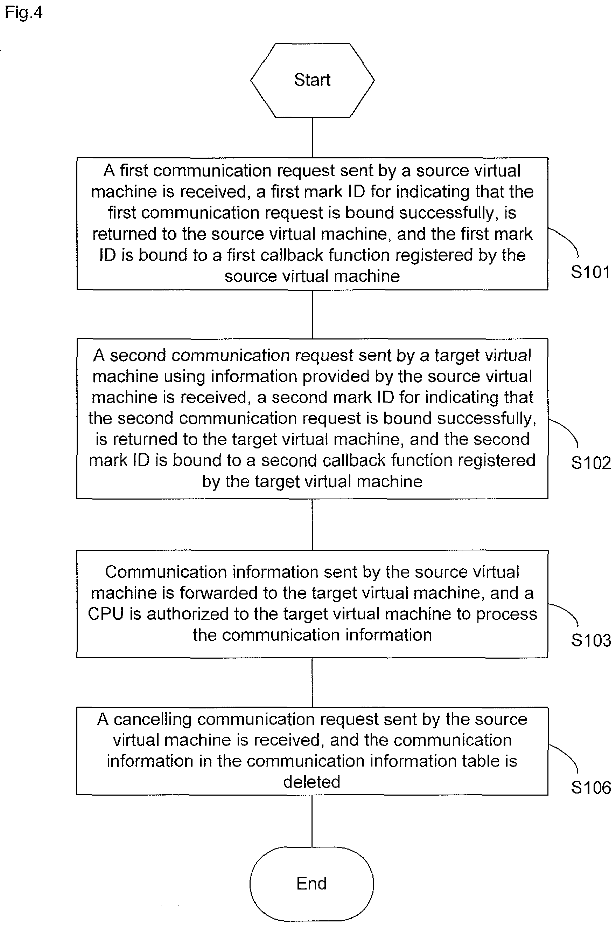

Referring to Fig. 4, provided is still another embodiment of a method for implementing communications between virtual machines based on a scheduling layer according to the present disclosure. After implementing step S103, the method may further include:
Step S106: A cancelling communication request sent by the source virtual machine is received, and the communication information in the communication information table is deleted.

In the embodiment, after communications between the source virtual machine and the target virtual machine are implemented by the scheduling layer, the scheduling layer needs to be notified by the source virtual machine to release binding information of the source virtual machine and all the target virtual machines, i.e., a cancelling communication request is sent by the source virtual machine to the scheduling layer, so as to request the scheduling layer to release the binding information of respective virtual machines. Meanwhile, after receiving the cancelling communication request sent by the source virtual machine, the scheduling layer further needs to delete the communication information, of the source virtual machine and all the target virtual machines which implement communications, stored in the communication information table. Furthermore, the source virtual machine and all the target virtual machines also need to simultaneously delete bindings between the first mark ID and the first callback function, and between the second mark ID and the second callbackk function.

After communications between the source virtual machine and all the target virtual machines are implemented by the scheduling layer, binding information of respective virtual machines are released, and the communication information, of the source virtual machine and all the target virtual machines which implement communications, stored in the communication information table, are deleted. In this way, it is further ensured that memory resources can be saved.

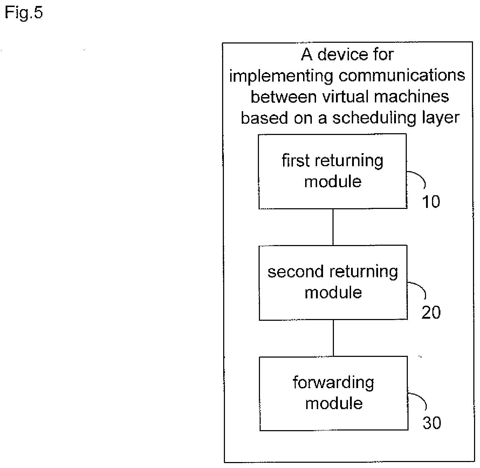

Referring to Fig. 5, provided is an embodiment of a device for implementing communications between virtual machines based on a scheduling layer according to the present disclosure. The device may include:
a first returning module 10, configured to receive a first communication request sent by a source virtual machine, return, a first mark ID for indicating that the first communication request is bound successfully, to the source virtual machine, and bind the first mark ID to a first callback function registered by the source virtual machine;
a second returning module 20, configured to receive a second communication request sent by a target virtual machine using information provided by the source virtual machine, return, a second mark ID for indicating that the second communication request is bound successfully, to the target virtual machine, and bind the second mark ID to a second callback function registered by the target virtual machine; and
a forwarding module 30, configured to forward communication information sent by the source virtual machine to the target virtual machine, and authorize a CPU to the target virtual machine to process the communication information.

In the device for implementing communications between virtual machines based on a scheduling layer provided by the present disclosure, communication requests from the source virtual machine and one or more target virtual machines are received by the scheduling layer, and unique mark IDs are returned respectively, so that the source virtual machine and the target virtual machine are bound to their respectively received mark IDs. Then, the communication information sent by the source virtual machine is forwarded by the scheduling layer to the target virtual machine to be processed therein. Every time after receiving a communication request, the scheduling layer may process the request at once, and sent a scheduling instruction. In this way, the communication requests between the virtual machines can be responded and processed rapidly.

In the embodiment, if the source virtual machine needs to communicate with one or more target virtual machines on its opposite side, firstly, a first communication request needs to be sent to a scheduling layer, requesting to be bound to the scheduling layer. After receiving the first communication request, the scheduling layer may return, by the first returning module 10, a unique first mark ID for indicating that the first communication request sent by the source virtual machine is bound successfully to the scheduling layer, to the source virtual machine according to the request and after the successful binding. After receiving the unique first mark ID, the source virtual machine may store the first mark ID, register a first callback function, and bind the first mark ID to the first callback function, so that when communicating with the target virtual machine, the source virtual machine can implement corresponding callback, so as to achieve the objective of communicating with the target virtual machine.

After receiving the first mark ID from the scheduling layer and registering the first callback function, the source virtual machine needs to sent a notice including binding information of the source virtual machine to the target virtual machine on its opposite side. Then, the target virtual machine may use information carried in the notice, and send a binding request defined as a second communication request to the scheduling layer, requesting to be bound to the scheduling layer. After receiving the second communication request, the scheduling layer may check whether performing the binding according to information carried in the second communication request, if the binding is performed successfully, the scheduling layer may return, by the second returning module 20, a unique second mark ID for indicating that the second communication request is successfully bound to the scheduling layer, to the target virtual machine. After receiving the unique second mark ID, the target virtual machine may store the second mark ID, register a second callback function, and bind the second mark ID to the second callback function, so that when communicating with the source virtual machine, the target virtual machine can implement corresponding callback, so as to achieve the objective of communicating with the source virtual machine.

In the embodiment, after receiving the first mark ID from the scheduling layer, registering the first callback function, and implementing the binding of the first mark ID to the first callback function, the source virtual machine needs to notify the target virtual machine desired to communicate with to request to be bound to the scheduling layer. In this way, the source virtual machine may provide the target virtual machine with information including a source virtual machine ID number and the first mark ID by sharing memory, so that the target virtual machine sends the second communication request according to the information. In the embodiment, the source virtual machine ID number and the target virtual machine ID number are unique ID numbers for indicating respective virtual machine, which are assigned to a source virtual machine and a target virtual machine when the scheduling layer performs initialization.

After the source virtual machine and the target virtual machine both implement successfully the binding to the scheduling layer, i.e., implementing a test process of communication requests from the source virtual machine and the target virtual machine, then the source virtual machine and the target virtual machine can communication with each other. Firstly, the source virtual machine may send communication information to the target virtual machine, and the scheduling layer may check at any time whether there is communication information sent by the source virtual machine to the target virtual machine, if there is, the forwarding module 30 may forward the communication information to the target virtual machine. Meanwhile, the scheduling layer may authorize a CPU to the target virtual machine to process the communication information. After receiving the communication information forwarded by the scheduling layer, the target virtual machine may call the second callback function bound to the second mark ID, so as to enter a target function, and process the communication information according to the corresponding function.

In the device for implementing communications between virtual machines based on a scheduling layer according to the present disclosure, communications between the source virtual machine and target virtual machine are implemented by the scheduling layer. Firstly, the first communication request and the second communication request sent respectively by the source virtual machine and the target virtual machine are received, and the first mark ID and the second mark ID for indicating successful bindings are returned, so that the source virtual machine and the target virtual machine are bound to their respectively received mark IDs. Then, the communication information sent by the source virtual machine is forwarded to the target virtual machine, and the CPU is authorized to the target virtual machine to process the communication information. By means of the aforementioned device to implement communications between the source virtual machine and the target virtual machine, the source virtual machine in an upper layer can sent communication information to the target virtual machine directly through the scheduling layer, thus communication speed between virtual machines can be improved to a great extent and memory resources can be saved.

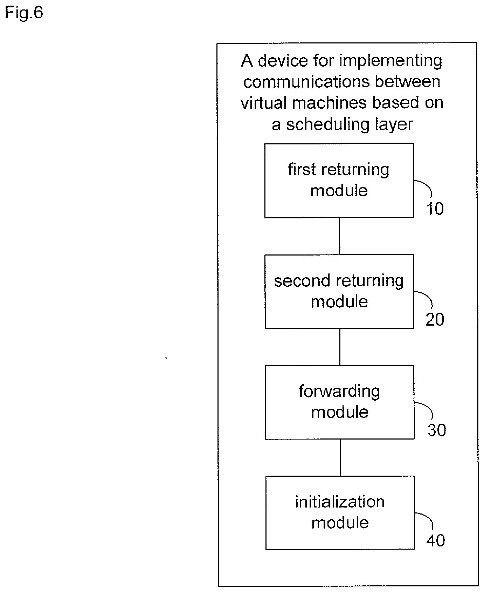

Referring to Fig. 6, provided is another embodiment of a device for implementing communications between virtual machines based on a scheduling layer according to the present disclosure. The device may further include:
an initialization module 40, configured to initialize states of the source virtual machine and the target virtual machine together with a communication information table for storing the communication information, and assign a source virtual machine ID number and a target virtual machine ID number to the source virtual machine and the target virtual machine, respectively.

In the embodiment, before communications between the source virtual machine and the target virtual machine are implemented by the scheduling layer, firstly, initialization needs to be performed by the initialization module 40, content of the initialization herein includes initializing states of the source virtual machine and the target virtual machine together with the communication information table, which is used to store the communication information after the scheduling layer receives communication requests from respective virtual machines. Whilst at the same time, ID numbers for indicating the source virtual machine and the target virtual machine need to be assigned respectively to the source virtual machine and the target virtual machine by the scheduling layer, and the two kinds of ID numbers may be defined respectively as a source virtual machine ID number and a target virtual machine ID number. Meanwhile, the source virtual machine and the target virtual machine need to be initialized in themselves, so as to register an interrupt function to facilitate establish communications with the scheduling layer.

Before communications between the source virtual machine and the target virtual machine are implemented, states of the source virtual machine and the target virtual machine together with the communication information table are initialized; whilst at the same time, the source virtual machine ID number and the target virtual machine ID number for indicating the source virtual machine and the target virtual machine are assigned respectively to the source virtual machine and the target virtual machine. Meanwhile, the source virtual machine and the target virtual machine need to be initialized in themselves. In this way, it is very convenient to receive communication requests from the source virtual machine and the target virtual machine by the scheduling layer, and to respond and process these communication requests rapidly. Accordingly, communication speed between virtual machines can be further ensured to a large extent.

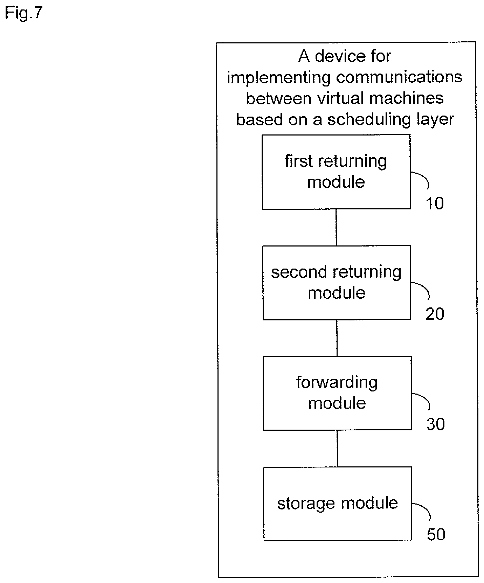

Referring to Fig. 7, provided is yet another embodiment of a device for implementing communications between virtual machines based on a scheduling layer according to the present disclosure. The device may further include:
a storage module 50, configured to store the first communication request in the communication information table.

In the embodiment, when the source virtual machine needs to communicate with one or more target virtual machines on its opposite side, firstly, a first communication request needs to be sent to the scheduling layer, requesting to be bound to the scheduling layer. After the scheduling layer receives the first communication request, the storage module 50 needs to store the first communication request, i.e., storing the first communication request in a communication information table in the scheduling layer, the communication information table provided herein is used to store the communication information after the scheduling layer receives the communication requests from respective virtual machines. After communications between the source virtual machine and the target virtual machine end, the scheduling layer may empty all the communication information stored in the communication information table, so as to store new communication information when communications between the source virtual machine and the target virtual machine are implemented next time.

The first communication request sent by the source virtual machine is stored in the communication information table of the scheduling layer, so as to store the communication information, which makes it convenient to check and test the communication information during communications between the source virtual machine and the target virtual machine.

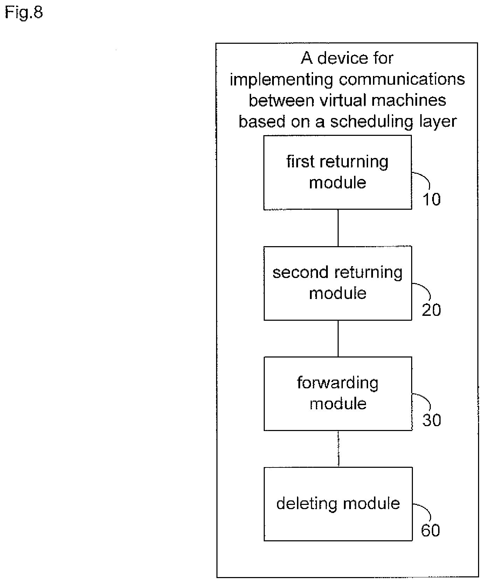

Referring to Fig. 8, provided is still another embodiment of a device for implementing communications between virtual machines based on a scheduling layer according to the present disclosure. The device may further include:
a deleting module 60, configured to receive a cancelling communication request sent by the source virtual machine, and delete the communication information in the communication information table.

In the embodiment, after communications between the source virtual machine and the target virtual machine are implemented by the scheduling layer, the scheduling layer needs to be notified by the source virtual machine to release binding information of the source virtual machine and all the target virtual machines, i.e., a cancelling communication request is sent by the source virtual machine to the scheduling layer, so as to request the scheduling layer to release the binding information of respective virtual machines. Meanwhile, after the scheduling layer receives the cancelling communication request sent by the source virtual machine, the deleting module 60 further needs to delete the communication information, of the source virtual machine and all the target virtual machines which implement communications, stored in the communication information table. Furthermore, the source virtual machine and all the target virtual machines also need to simultaneously delete bindings between the first mark ID and the first callback function, and between the second mark ID and the second callbackk function.

After communications between the source virtual machine and all the target virtual machines are implemented by the scheduling layer, binding information of respective virtual machines are released, and the communication information, of the source virtual machine and all the target virtual machines which implement communications, stored in the communication information table, are deleted. In this way, it is further ensured that memory resources can be saved.

What described are merely preferable embodiments of the present disclosure, and are not intended to limit the scope of the present disclosure. All equivalent structures or equivalent flow variations made using content of the specification and accompanying drawings of the present disclosure, or direct or indirect application to another related technical field, likewise fall within the scope of the present disclosure.

## Claims

1. A method for implementing communications between virtual machines based on a scheduling layer in a mobile terminal, comprising:
receiving (S101), by the scheduling layer, a first communication request sent by a source virtual machine, returning, a first mark ID for indicating that the first communication request is bound successfully to the scheduling layer, to the source virtual machine, and associating the first mark ID with a first callback function registered by the source virtual machine to implement the binding between the source virtual machine and the scheduling layer, the source virtual machine sending a notice including binding information of the source virtual machine to a target virtual machine on its opposite side;
receiving (S102), by the scheduling layer, a second communication request sent by the target virtual machine using information carried in the notice provided by the source virtual machine, returning, a second mark ID for indicating that the second communication request is bound successfully to the scheduling layer, to the target virtual machine, and associating the second mark ID with a second callback function registered by the target virtual machine to implement the binding between the target virtual machine and the scheduling layer; and
forwarding (S103), by the scheduling layer, communication information sent by the source virtual machine to the target virtual machine, and authorizing a CPU of the mobile terminal to the target virtual machine to process the communication information, wherein after receiving the communication information forwarded by the scheduling layer, the target virtual machine calls the second callback function associated with the second mark ID, enters a target function, and processes the communication information according to the target function.

2. The method according to claim 1, wherein before the step of receiving (S101), by the scheduling layer, a first communication request sent by a source virtual machine, and returning, a first mark ID for indicating that the first communication request is bound successfully, the method further comprises:
initializing (S104), by the scheduling layer, states of the source virtual machine and the target virtual machine together with a communication information table for storing the communication information, and assigning a source virtual machine ID number and a target virtual machine ID number to the source virtual machine and the target virtual machine, respectively.

3. The method according to claim 2, wherein the target virtual machine using information provided by the source virtual machine, comprises:
the target virtual machine using the source virtual machine ID number and the first mark ID provided by the source virtual machine.

4. The method according to claim 2, wherein before the step of returning (S101), a first mark ID for indicating that the first communication request is bound successfully to the scheduling layer, to the source virtual machine, the method further comprises:
storing (S105), by the scheduling layer, the first communication request in the communication information table.

5. The method according to any one of claims 2 to 4, wherein after the step of forwarding (S103), by the scheduling layer, communication information sent by the source virtual machine to the target virtual machine, and authorizing a CPU of the mobile terminal to the target virtual machine to process the communication information, the method further comprises:
receiving (S106), by the scheduling layer, a cancelling communication request sent by the source virtual machine, and deleting the communication information in the communication information table.

6. A device for implementing communications between virtual machines based on a scheduling layer in a mobile terminal, comprising:
a first returning module (10), configured to receive a first communication request sent by a source virtual machine, return, a first mark ID for indicating that the first communication request is bound successfully to the scheduling layer, to the source virtual machine, and associate the first mark ID with a first callback function registered by the source virtual machine to implement the binding between the source virtual machine and the scheduling layer, the source virtual machine sending a notice including binding information of the source virtual machine to a target virtual machine on its opposite side;
a second returning module (20), configured to receive a second communication request sent by the target virtual machine using information carried in the notice provided by the source virtual machine, return, a second mark ID for indicating that the second communication request is bound successfully to the scheduling layer, to the target virtual machine, and associate the second mark ID with a second callback function registered by the target virtual machine to implement the binding between the target virtual machine and the scheduling layer; and
a forwarding module (30), configured to forward communication information sent by the source virtual machine to the target virtual machine, and authorize a CPU of the mobile terminal to the target virtual machine to process the communication information, wherein after receiving the communication information forwarded by the scheduling layer, the target virtual machine calls the second callback function bound to the second mark ID, enters a target function, and processes the communication information according to the target function.

7. The device according to claim 6, further comprising:
an initialization module (40), configured to initialize states of the source virtual machine and the target virtual machine together with a communication information table for storing the communication information, and assign a source virtual machine ID number and a target virtual machine ID number to the source virtual machine and the target virtual machine, respectively.

8. The device according to claim 7, wherein the target virtual machine using information provided by the source virtual machine, comprises: the source virtual machine ID number and the first mark ID.

9. The device according to claim 7, further comprising:
a storage module (50), configured to store the first communication request in the communication information table.

10. The device according to any one of claims 7 to 9, further comprising:
a deleting module (60), configured to receive a cancelling communication request sent by the source virtual machine, and delete the communication information in the communication information table.

## Patentansprüche

1. Verfahren zur Durchführung von Kommunikation zwischen virtuellen Maschinen basierend auf einer Planungsschicht in einem mobilen Endgerät, Folgendes umfassend:
Empfangen (S101) durch die Planungsschicht einer ersten Kommunikationsanfrage, die durch eine virtuelle Quellmaschine gesendet wird, Zurücksenden einer ersten Kennzeichnungs-ID als Hinweis dafür, dass die erste Kommunikationsanfrage erfolgreich an die Planungsschicht gebunden ist, an die virtuelle Quellmaschine, und Zuordnen der ersten Kennzeichnungs-ID zu einer ersten Rückruffunktion, die durch die virtuelle Quellmaschine registriert wird, um die Bindung zwischen der virtuellen Quellmaschine und der Planungsschicht durchzuführen, wobei die virtuelle Quellmaschine eine Mitteilung sendet, welche die Bindungsinformation der virtuellen Quellmaschine mit einer virtuellen Zielmaschine an deren gegenüberliegenden Seite enthält;
Empfangen (S102) durch die Planungsschicht einer zweiten Kommunikationsanfrage, die durch die virtuelle Zielmaschine gesendet wird, unter Verwendung einer Information, die in der Mittelung befördert wird, die durch die virtuelle Quellmaschine bereitgestellt wird, Zurücksenden einer zweiten Kennzeichnungs-ID als Hinweis dafür, dass die zweite Kommunikationsanfrage erfolgreich an die Planungsschicht gebunden ist, an die virtuelle Zielmaschine und Zuordnen der zweiten Kennzeichnungs-ID zu einer zweiten Rückruffunktion, die durch die virtuelle Zielmaschine registriert wird, um die Bindung zwischen der virtuellen Zielmaschine und der Planungsschicht durchzuführen; und
Weiterleitung (S103) durch die Planungsschicht der Kommunikationsinformation, die von der virtuellen Quellmaschine an die virtuelle Zielmaschine gesendet wird, und Autorisieren einer CPU des mobilen Endgerätes an die virtuelle Zielmaschine, die Kommunikationsinformation zu verarbeiten, wobei die virtuelle Zielmaschine nach dem Empfang der Kommunikationsinformation, die durch die Planungsschicht weitergeleitet wird, die zweite Rückruffunktion aufruft, die der zweiten Kennzeichnungs-ID zugeordnet wird, eine Zielfunktion eingibt, und die Kommunikationsinformation gemäß der Zielfunktion verarbeitet.

2. Verfahren nach Anspruch 1, wobei das Verfahren vor dem Schritt des Empfangens (S101) durch die Planungsschicht einer ersten Kommunikationsanfrage, die durch eine virtuelle Quellmaschine gesendet wird, und dem Zurücksenden einer ersten Kennzeichnungs-ID als Hinweis dafür, dass die erste Kommunikationsanfrage erfolgreich gebunden ist darüber hinaus Folgendes umfasst:
Initialisieren (S104) durch die Planungsschicht von Zuständen der virtuellen Quellmaschine und der virtuellen Zielmaschine gemeinsam mit einer Kommunikationsinformationstabelle zum Speichern der Kommunikationsinformation, und Zuweisen einer ID-Nummer einer virtuellen Quellmaschine und einer ID-Nummer einer virtuellen Zielmaschine jeweils zur virtuellen Quellmaschine und virtuellen Zielmaschine.

3. Verfahren nach Anspruch 2, wobei die virtuelle Zielmaschine, die Informationen verwendet, die von der virtuellen Quellmaschine bereitgestellt werden, Folgendes umfasst:
die virtuelle Zielmaschine, welche die ID-Nummer der virtuellen Quellmaschine und die erste Kennzeichnungs-ID verwendet, die durch die virtuelle Quellmaschine bereitgestellt wird.

4. Verfahren nach Anspruch 2, wobei das Verfahren vor dem Schritt des Zurücksendens (S101) einer ersten Kennzeichnungs-ID als Hinweis dafür, dass die erste Kommunikationsanfrage erfolgreich an die Planungsschicht gebunden ist, an die virtuelle Quellmaschine darüber hinaus Folgendes umfasst:
Speichern (S105) durch die Planungsschicht der ersten Kommunikationsanfrage in der Kommunikationsinformationstabelle.

5. Verfahren nach einem der Ansprüche 2 bis 4, wobei das Verfahren nach dem Schritt des Weiterleitens (S103) durch die Planungsschicht der Kommunikationsinformation, die durch die virtuelle Quellmaschine an die virtuelle Zielmaschine gesendet wird, und der Autorisierung einer CPU des mobilen Endgerätes an die virtuelle Zielmaschine zum Verarbeiten der Kommunikationsinformation darüber hinaus Folgendes umfasst:
Empfangen (S106) durch die Planungsschicht einer Anfrage zur Kommunikationsaufhebung, die von der virtuellen Quellmaschine gesendet wird, und Löschen der Kommunikationsinformation in der Kommunikationsinformationstabelle.

6. Vorrichtung zum Durchführen von Kommunikationen zwischen virtuellen Maschinen basierend auf einer Planungsschicht in einem mobilen Endgerät, Folgendes umfassend:
ein erstes Rücksendemodul (10), das konfiguriert ist, um eine erste Kommunikationsanfrage zu empfangen, die durch eine virtuelle Quellmaschine gesendet wird, um eine erste Kennzeichnungs-ID als Hinweis dafür, dass die erste Kommunikationsanfrage erfolgreich an die Planungsschicht gebunden ist, an die virtuelle Quellmaschine zurückzusenden, und um die erste Kennzeichnungs-ID einer ersten Rückruffunktion zuzuordnen, die durch die virtuelle Quellmaschine registriert wird, um die Bindung zwischen der virtuellen Quellmaschine und der Planungsschicht durchzuführen, wobei die virtuelle Quellmaschine eine Mitteilung sendet, welche die Bindungsinformation der virtuellen Quellmaschine zu einer virtuellen Zielmaschine an deren gegenüberliegenden Seite enthält;
ein zweites Rücksendemodul (20), das konfiguriert ist, um eine zweite Kommunikationsanfrage zu empfangen, die durch die virtuelle Zielmaschine gesendet wird, unter Verwendung einer Information, die in der Mittelung befördert wird, die durch die virtuelle Quellmaschine bereitgestellt wird, um eine zweite Kennzeichnungs-ID als Hinweis dafür, dass die zweite Kommunikationsanfrage erfolgreich an die Planungsschicht gebunden ist, an die virtuelle Zielmaschine zurückzusenden und um die zweite Kennzeichnungs-ID einer zweiten Rückruffunktion zuzuordnen, die durch die virtuelle Zielmaschine registriert wird, um die Bindung zwischen der virtuellen Zielmaschine und der Planungsschicht durchzuführen; und
ein Weiterleitungsmodul (30), das konfiguriert ist, um Kommunikationsinformation, die von der virtuellen Quellmaschine an die virtuelle Zielmaschine gesendet wird, weiterzuleiten, und um eine CPU des mobilen Endgerätes an die virtuelle Zielmaschine zu autorisieren, die Kommunikationsinformation zu verarbeiten, wobei die virtuelle Zielmaschine nach dem Empfang der Kommunikationsinformation, die durch die Planungsschicht weitergeleitet wird, die zweite Rückruffunktion aufruft, die der zweiten Kennzeichnungs-ID zugeordnet ist, eine Zielfunktion eingibt, und die Kommunikationsinformation gemäß der Zielfunktion verarbeitet.

7. Vorrichtung nach Anspruch 6, darüber hinaus Folgendes umfassend:
ein Initialisierungsmodul (40), das konfiguriert ist, um Zustände der virtuellen Quellmaschine und der virtuellen Zielmaschine gemeinsam mit einer Kommunikationsinformationstabelle zum Speichern der Kommunikationsinformation zu initialisieren, und um eine ID-Nummer einer virtuellen Quellmaschine und eine ID-Nummer einer virtuellen Zielmaschine jeweils der virtuellen Quellmaschine und der virtuellen Zielmaschine zuzuordnen.

8. Vorrichtung nach Anspruch 7, wobei die virtuelle Zielmaschine, welche die Information verwendet, die von der virtuellen Quellmaschine bereitgestellt wird, Folgendes umfasst: die ID-Nummer der virtuellen Quellmaschine und die erste Kennzeichnungs-ID.

9. Vorrichtung nach Anspruch 7, darüber hinaus Folgendes umfassend:
ein Speichermodul (50), das konfiguriert ist, um die erste Kommunikationsanfrage in der Kommunikationsinformationstabelle zu speichern.

10. Vorrichtung nach einem der Ansprüche 7 bis 9, darüber hinaus Folgendes umfassend:
ein Löschmodul (60), das konfiguriert ist, um eine Anfrage zur Kommunikationsaufhebung zu empfangen, die von der virtuellen Quellmaschine gesendet wird, und um die Kommunikationsinformation in der Kommunikationsinformationstabelle zu löschen.

## Revendications

1. Procédé pour implémenter des communications entre des machines virtuelles basé sur une couche d'ordonnancement dans un terminal mobile, comprenant :
la réception (S101), par la couche d'ordonnancement, d'une première demande de communication envoyée par une machine virtuelle source, renvoyant, un premier repère ID pour indiquer que la première demande de communication est liée avec succès à la couche d'ordonnancement, à la machine virtuelle source, et associant le premier repère ID à une première fonction de rappel enregistrée par la machine virtuelle source pour implémenter le lien entre la machine virtuelle source et la couche d'ordonnancement, la machine virtuelle source envoyant une notice incluant des informations de lien de la machine virtuelle source à une machine virtuelle cible sur son côté opposé ;
la réception (S102), par la couche d'ordonnancement, d'une seconde demande de communication envoyée par la machine virtuelle cible à l'aide d'informations portées dans la notice fournie par la machine virtuelle source, renvoyant, un second repère ID pour indiquer que la seconde demande de communication est liée avec succès à la couche d'ordonnancement, à la machine virtuelle cible, et associant le second repère ID à une seconde fonction de rappel enregistrée par la machine virtuelle cible pour implémenter le lien entre la machine virtuelle cible et la couche d'ordonnancement ; et
le réacheminement (S103), par la couche d'ordonnancement, d'informations de communication envoyées par la machine virtuelle source à la machine virtuelle cible, et l'autorisation d'une unité centrale du terminal mobile à la machine virtuelle cible à traiter les informations de communication, dans lequel après réception des informations de communication réacheminées par la couche d'ordonnancement, la machine virtuelle cible appelle la seconde fonction de rappel associée au second repère ID, entre une fonction cible, et traite les informations de communication selon la fonction cible.

2. Procédé selon la revendication 1, dans lequel avant l'étape de réception (S101), par la couche d'ordonnancement, d'une première demande de communication envoyée par une machine virtuelle source, et de renvoi, d'un premier repère ID pour indiquer que la première demande de communication est liée avec succès, le procédé comprend en outre :
l'initialisation (S104), par la couche d'ordonnancement, d'états de la machine virtuelle source et de la machine virtuelle cible conjointement avec une table d'informations de communication destinée à stocker les informations de communication, et l'assignation d'un numéro ID de machine virtuelle source et d'un numéro ID de machine virtuelle cible à la machine virtuelle source et à la machine virtuelle cible, respectivement.

3. Procédé selon la revendication 2, dans lequel la machine virtuelle cible utilisant des informations fournies par la machine virtuelle source, comprend :
la machine virtuelle cible utilisant le numéro ID de machine virtuelle source et le premier repère ID fourni par la machine virtuelle source.

4. Procédé selon la revendication 2, dans lequel avant l'étape de renvoi (S101) d'un premier repère ID pour indiquer que la première demande de communication est liée avec succès à la couche d'ordonnancement, à la machine virtuelle source, le procédé comprend en outre :
le stockage (S105), par la couche d'ordonnancement, de la première demande de communication dans la table d'informations de communication.

5. Procédé selon l'une quelconque des revendications 2 à 4, dans lequel après l'étape de réacheminement (S103), par la couche d'ordonnancement, d'informations de communication envoyées par la machine virtuelle source à la machine virtuelle cible, et d'autorisation d'une unité centrale du terminal mobile à la machine virtuelle cible à traiter les informations de communication, le procédé comprend en outre :
la réception (S106), par la couche d'ordonnancement, d'une demande de communication d'annulation envoyée par la machine virtuelle source, et la suppression des informations de communication dans la table d'informations de communication.

6. Dispositif pour implémenter des communications entre des machines virtuelles basé sur une couche d'ordonnancement dans un terminal mobile, comprenant :
un premier module de renvoi (10), configuré pour recevoir une première demande de communication envoyée par une machine virtuelle source, renvoyer, un premier repère ID pour indiquer que la première demande de communication est liée avec succès à la couche d'ordonnancement, à la machine virtuelle source, et associer le premier repère ID à une première fonction de rappel enregistrée par la machine virtuelle source pour implémenter le lien entre la machine virtuelle source et la couche d'ordonnancement, la machine virtuelle source envoyant une notice incluant des informations de lien de la machine virtuelle source à une machine virtuelle cible sur son côté opposé ;
un second module de renvoi (20), configuré pour recevoir une seconde demande de communication envoyée par la machine virtuelle cible à l'aide d'informations portées dans la notice fournie par la machine virtuelle source, renvoyer, un second repère ID pour indiquer que la seconde demande de communication est liée avec succès à la couche d'ordonnancement, à la machine virtuelle cible, et associer le second repère ID avec une seconde fonction de rappel enregistrée par la machine virtuelle cible pour implémenter le lien entre la machine virtuelle cible et la couche d'ordonnancement ; et
un module de réacheminement (30), configuré pour réacheminer des informations de communication envoyées par la machine virtuelle source à la machine virtuelle cible, et autoriser une unité centrale du terminal mobile à la machine virtuelle cible à traiter les informations de communication, dans lequel après réception des informations de communication réacheminées par la couche d'ordonnancement, la machine virtuelle cible appelle la seconde fonction de rappel liée au second repère ID, entre une fonction cible, et traite les informations de communication selon la fonction cible.

7. Dispositif selon la revendication 6, comprenant en outre :
un module d'initialisation (40), configuré pour initialiser des états de la machine virtuelle source et de la machine virtuelle cible conjointement avec une table d'informations de communication destinée à stocker les informations de communication, et pour assigner un numéro d'identifiant de machine virtuelle source et un numéro d'identifiant de machine virtuelle cible à la machine virtuelle source et la machine virtuelle cible, respectivement.

8. Dispositif selon la revendication 7, dans lequel la machine virtuelle cible utilisant des informations fournies par la machine virtuelle source, comprend : le numéro ID de machine virtuelle source et le premier repère ID.

9. Dispositif selon la revendication 7, comprenant en outre :
un module de stockage (50), configuré pour stocker la première demande de communication dans la table d'informations de communication.

10. Dispositif selon l'une quelconque des revendications 7 à 9, comprenant en outre :
un module de suppression (60), configuré pour recevoir une demande de communication d'annulation envoyée par la machine virtuelle source, et supprimer les informations de communication dans la table d'informations de communication.
